# EUROPÄISCHE PATENTANMELDUNG

(11) **EP 0 698 588 A2**
(43) Veröffentlichungstag der Anmeldung: **28.02.1996**
(21) Anmeldenummer: 95112893.3
(22) Anmeldetag: 17.08.1995
(51) Int. Cl.: C04B 35/528, C04B 35/622, B01J 21/18, B01J 35/04, B01J 19/30

(54) **Graphit-Presslinge**

(30) Priorität: 27.08.1994 DE 4430478
(71) Anmelder: BASF AKTIENGESELLSCHAFT, D-67056 Ludwigshafen (DE)
(72) Erfinder: Meissner, Ruprecht, D-67273 Weisenheim (DE); Irgang, Matthias, Dr., D-69121 Heidelberg (DE); Eger, Knut, Dr., D-67117 Limburgerhof (DE); Weidlich, Peter, Dr., D-68159 Mannheim (DE); Dreyer, Heinz, Dr., D-67063 Ludwigshafen (DE)

(57) **Zusammenfassung**

Preßlinge, die zu 30 bis 100 Gew.-% aus Graphit bestehen, hergestellt aus Graphit-Pulvern, die aus 5 bis 100 Gew.-% rhomboedrisch kristallisiertem Graphit bestehen und gegebenenfalls Zuschlagstoffe und/oder Bindemittel enthalten sowie ein Verfahren zu deren Herstellung und deren Verwendung als Katalysator-Träger, Wärmeübertragungsmaterial, Kolonnenfüllkörper oder Verdünnungsmaterial in Katalysatorbetten.

## Beschreibung

Die vorliegende Erfindung betrifft Preßlinge aus Graphit, hergestellt aus hexagonal und/oder rhomboedrisch kristallisierten Graphit-Pulvern und gegebenenfalls Zuschlagstoffen und/oder Bindemitteln, sowie ein Verfahren zu deren Herstellung.

Die Herstellung von Formteilen aus Graphit (Kirk-Othmer, Encyclopedia of Chemical Technology Vol. 4, 4th Edition, 1992, Seite 953 bis 974) erfolgt entweder durch Extrudieren oder durch Verpressen in Matrizen. Als Rohstoff werden unterschiedliche Mischungen eingesetzt von
- Füllmaterial (bevorzugt Petrolkoks, Pechkohle, Anthrazit, Naturgraphit, synthetische Harze),
- Binder (verschiedene Pecharten mit Erweichungspunkten von 60°C bis 180°C oder Phenolharze)
- und Additiven (z.B. Fetten und Wachsen als Gleitmittel, Eisenoxid und Borsäure z.B. DE-A-25 35 791).

Das Verpressen in Matrizen wird insbesondere für kleine Formteile, wie sie z.B. in der Elektrotechnik als Elektroden und als Motorbürsten, im Apparatebau für Dichtungen und Packungen sowie in der chemischen Industrie als inerte Füllkörper in Kolonnen, als Katalysator-Träger und auch als Verdünnungsmaterial in Katalysatorbetten (EP-A-60 317) eingesetzt werden, benutzt. Dabei werden sehr unterschiedliche Pressen verwendet, z.B. Pressen mit beheizten Matrizen, zweiseitig wirkende Pressen oder Pressen mit flexiblen Formen (isostatische Pressen).

Die Weiterverarbeitung der Rohformlinge nach dem Stand der Technik umfaßt zwei Temperatur-Behandlungen. Zunächst wird in reduzierender oder inerter Atmosphäre der Binder bei 800 bis 1000°C verkokt. Dabei entstehen große Mengen an flüchtigen Zersetzungsprodukten, die polycyclische Aromaten enthalten und daher aufwendige Maßnahmen bei der Abgasreinigung erfordern.

In einem weiteren Schritt erfolgt die Graphitierung bei Temperaturen von 2600 bis 3000°C. Bei dieser Behandlung ordnet sich der Kohlenstoff aus Füllmaterial und Binder zur gewünschten Graphitstruktur.

Die bekannten Verfahren zur Herstellung von Graphit-Preßlingen erfordern aufwendige Preßtechnik, hohe Temperaturen und z.T. gesundheitsschädliche Zuschlagstoffe und waren daher verbesserungsbedürftig.

Der vorliegenden Erfindung lag daher die Aufgabe zugrunde, den zuvor genannten Nachteilen abzuhelfen.

Demgemäß wurden neue Preßlinge gefunden, die zu 30 bis 100 Gew.-% aus Graphit bestehen, hergestellt aus Graphit-Pulvern, die aus 5 bis 100 Gew.-% rhomboedrisch kristallisiertem Graphit bestehen und gegebenenfalls Zuschlagstoffe und/oder Bindemittel enthalten, sowie ein Verfahren zu deren Herstellung und deren Verwendung als Katalysator-Träger, Wärmeübertragungsmaterial, Kolonnenfüllkörper oder Verdünnungsmaterial in Katalysatorbetten.

Die erfindungsgemäßen Preßlinge können wie folgt hergestellt werden:
Graphit-Mischungen, die rhomboedrisch kristallisierten Graphit und gegebenenfalls Zuschlagstoffe und/oder Bindemitteln enthalten, können bei Temperaturen von 10 bis 100°C und Drücken von 5 bis 100 KN verpreßt und bevorzugt einer Wärmebehandlung bei Temperaturen von 300 bis 800°C, bevorzugt von 400 bis 600°C, unter Sauerstoffausschluß unterworfen werden.

Als Zuschlagstoffe eignen sich beispielsweise Al₂O₃, ZrO₂, SiO₂, TiO₂, SiC, Kokspulver und silikatische Pulver sowie Metallpulver. Dadurch kann man wichtige Eigenschaften wie z.B. Dichte, Porosität, elektrische Leitfähigkeit und Wärmeleitfähigkeit in weiten Grenzen variieren.

Als Bindemittel eignen sich solche, die bei Temperaturen zwischen 300 und 800°C verkokbar sind, z.B. Alginate, Zellulose-Derivate oder andere Kohlenhydrate, bevorzugt Monosaccharide wie Fructose, Glucose, Galactose und/oder Mannose und besonders bevorzugt Oligosaccharide wie Saccharose, Maltose und/oder Lactose.

Die Verkokung erfolgt unter Sauerstoff-Ausschluß.

Die erfindungsgemäßen Preßlinge haben eine hohe Festigkeit und gute Wärme- sowie elektrischer Leitfähigkeit. Sie sind chemisch inert und gegenüber Luft bis 400°C stabil.

Die Herstellung der Preßlinge kann z.B. mit Rundläufer-Tablettenmaschinen, wie sie auch in der pharmazeutischen Industrie verwendet werden, oder mit Excenterpressen mit Vielfach-Werkzeug durchgeführt werden.

Dabei ist es nötig, Formkörper mit niedrigem Druckverlust, großem Oberfläche/Volumen-Verhältnis und guter Trennleistung einzusetzen, wie sie aus der Destillationstechnik bekannt sind. Durch die erfindungsgemäße Herstellung sind jetzt zahlreiche Formen aus tablettiertem Graphit, z.B. Raschigringe, Tri- und Tetralobes, Berl-Sättel und anderen Formen, die vom Vollzylinder abweichen, zugänglich geworden.

Bevorzugt führt man vor der Tablettierung eine Kompaktierung und Granulierung durch. Dadurch erhält man für die Tablettierung ein dichteres Korn mit größerem Durchmesser und besserer Rieselfähigkeit.

Die erfindungsgemäßen Preßlinge bestehen zu 30 bis 100 Gew.-%, bevorzugt 50 bis 100 Gew.-%, aus Graphit und 70 bis 0 Gew.-%, bevorzugt 50 bis 0 Gew.-% aus Zuschlagstoffen. Das Graphit-Pulver besteht aus 5 bis 100 Gew.-%, bevorzugt 8 bis 100 Gew.-% rhomboedrisch kristallisiertem Graphit und das zur Verpressung eingesetzte Material besteht aus 30 bis 100 Gew.-%, bevorzugt 50 bis 100 Gew.-% Graphit, 70 bis 0 Gew.-%, bevorzugt 50 bis 0 Gew.-% aus Zuschlagsstoffen und 0 bis 30 Gew.-%, bevorzugt 2 bis 20 Gew.-% aus Bindemittel.

Mit dem erfindungsgemäßen Verfahren kann man z.B. bei Tabletten mit den Maßen 4.75 x 4.75 mm (Durchmesser x Höhe) eine Seitendruckfestigkeit von mehr als 100 N erzielen. Nach der gleichen Methode wurden auch Ring-Tabletten mit den Maßen 5x5x2 mm und 7x7x3 mm (Außendurchmesser x Höhe x Innendurchmesser) und Seitendruckfestigkeiten von 60 bis 80 N hergestellt.

Die Tabletten aus 100 % Graphit erwiesen sich als dicht und wenig porös. Die Porositätsbestimmung mit dem Quecksilberporosimeter ergab ca. 0.1 ml/g.

Die erfindungsgemäßen Preßlinge können im chemischen Apparatebau als Dichtungs- und Packungsmaterial verwendet werden.

Sie werden weiterhin in der chemischen Verfahrenstechnik wegen ihrer guten Wärmeleitfähigkeit und chemischen Beständigkeit als Füllkörper, als Wärmetauscher- oder Verdünnungsmaterial in Katalysatorbetten eingesetzt.

Zur Charakterisierung des Strömungswiderstandes im Reaktor wird der Druckverlust von Luft in mbar/m Füllhöhe bei einer Gasgeschwindigkeit von 1.0 m/sec. bezogen auf den leeren Reaktorquerschnitt angegeben.

Zur Herstellung von Katalysatoren können poröse Graphit-Tabletten mit geeigneten Metallsalz-Lösungen getränkt und anschließend getrocknet und getempert werden. Auch kann das Graphit-Pulver vor der Tablettierung mit Aktivkomponenten versetzt und dann die Tablettierung gemäß der angegebenen Methode durchgeführt werden.

Werden Graphit-Tabletten als Katalysator-Verdünnungsmaterial verwendet, so sollen sie gleichmäßig im ganzen Katalysatorbett verteilt sein, denn diese sichert die gleichmäßige Benetzung und die Vermeidung von überhitzten bzw. kalten Stellen im Reaktor. Diese Gleichmäßigkeit wird in der Regel erreicht, wenn Abmessungen und Dichte von Katalysator und Verdünnungsmaterial annähernd gleich sind, sodaß keine Entmischung beim Befüllen von Reaktoren eintritt.

Schließlich werden tablettierte Graphit-Formteile, die auch Metallpulverzusätze enthalten können, und z.T. mit eingepreßten Drahtzuführungen gefertigt werden, als "Kohlebürsten" im Motorenbau oder als Elektroden benutzt. Auch diese lassen sich nach der erfindungsgemäßen Methode herstellen.

### Beispiele

### Beispiel 1 (Vergleichsbeispiel)

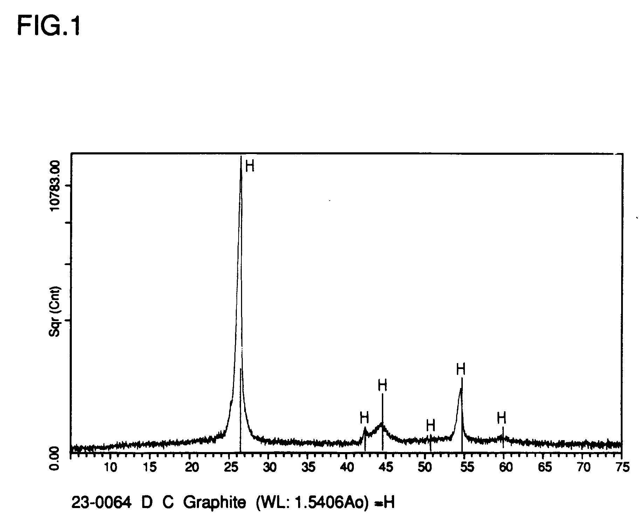

Ein Elektrographitstaub mit der Korngröße 0.01-0.1 mm, der gemäß Röntgendiffraktogramm nur aus hexagonalen Graphit besteht (Röntgendiffraktogramm s. Abb. 1), wird mit 10 Gew.-% Saccharose gemischt und einem Walzenkompaktor zugeführt. Es läßt sich jedoch kein Kompaktat erhalten. In der Tablettenpresse wird zwar eine gute Matrizenfüllung erreicht, jedoch zerfällt das Material beim Abziehen der Matrize wieder zu Pulver.

### Erfindungsgemäße Beispiele

### Beispiel 2

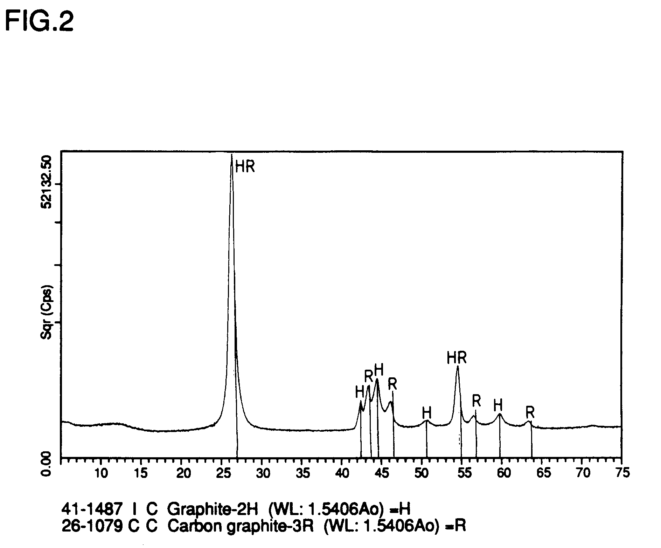

Ein Graphit-Pulver mit einem Anteil von ca. 10 Gew.-% an rhomboedrischem Kohlenstoff (Röntgendiffraktogramm Abb. 2) wird mit 10 Gew.-% gepulverter Saccharose intensiv gemischt und in einem Walzenkompaktor verdichtet. Das Kompaktat wird auf einem Siebzerkleinerer desagglomeriert und der Feinanteil des Granulats, der kleiner als 200 µm ist, abgesiebt. Das Granulat mit einem Litergewicht von 850 g/l wird auf einer Rundläufer-Tablettiermaschine bei einer Füllhöhe von 12 mm zu Tabletten mit den Abmessungen 4.75 x 4.75 mm (Durchmesser x Höhe) verpreßt.

Die erhaltenen Rohtabletten zeigen eine Seitendruckfestigkeit von ca. 50 N.

Diese Tabletten werden in einen mit Stickstoff gespülten Hordenofen übergeführt, innerhalb von 3 Stunden auf 500°C aufgeheizt und 2 Stunden auf dieser Temperatur gehalten.

Die fertigen Graphit-Tabletten haben folgende Eigenschaften:

| | | |
|---|---|---|
| Litergewicht | 1215 | g/l |
| Seitendruckfestigkeit | 126 | N |
| Porosität | 0.10 | ml/g |
| BET-Oberfläche | 5.5 | m²/g |
| Wärmeleitfähigkeit | 150 | kcal/m*h*K |
| elektrische Leitfähigkeit | 1.25 *10⁻³ | Ω⁻¹cm⁻¹ |
| Druckverlust in Luft | 48.5 | mbar/m |
| (f. lose Schüttung u. Gasgeschwindigkeit=1.0 m/s) | | |

### Beispiel 3

Man verfährt wie in Beispiel 2, verpreßt das Graphit-Granulat zu Ring-Tabletten mit den Maßen 5 x 2 x 5 mm (Außendurchmesser x Innendurchmesser x Höhe) und tempert bei 500°C im Stickstoffstrom.

Die erzielten Tabletteneigenschaften lauten:

| | | |
|---|---|---|
| Litergewicht | 937 | g/l |
| Seitendruckfestigkeit | 60 | N |
| Porosität | 0.02 | ml/g |
| BET-Oberfläche | 5.2 | m²/g |
| Druckverlust in Luft | 26 | mbar/m |
| (f. lose Schüttung u. Gasgeschwindigkeit=1.0 m/s) | | |

### Beispiel 4

Man verfährt wie in Beispiel 2 und verpreßt eine Mischung von 65 Gewichtsteilen Graphit-Pulver, das ca. 10 Gew.-% rhomboedrischen Kohlenstoff enthält, mit 35 Gew.-% Böhmitpulver und 10 Gew.-% Saccharose zu Tabletten mit den Maßen 4.75x4.75 mm.

Nach einer Temperung bei 500°C unter Stickstoffatmosphäre haben die Tabletten folgende Eigenschaften:

| | | |
|---|---|---|
| Litergewicht | 900 | g/l |
| Seitendruckfesigkeit | 74 | N |
| Porosität | 0.27 | ml/g |
| BET-Oberfläche | 65 | m²/g |

### Beispiel 5

Man verfährt wie in Beispiel 2 und verpreßt eine Mischung von 90 Gewichtsteilen Graphit, der ca. 10 Gew.-% rhomboedrischen Kohlenstoff enthält, mit 10 Gew.-% Kupferpulver und 10 Gew.-% Saccharose zu Tabletten mit den Maßen 4.75 x 4.75 mm. Nach Temperung bei 500°C unter Stickstoffatmosphäre haben die Tabletten folgende Eigenschaften:

| | | |
|---|---|---|
| Litergewicht | 1190 | g/l |
| Porosität | 0.12 | ml/g |
| Seitendruckfestigkeit | 164 | N |
| BET-Oberfläche | 4 | m²/g |

### Beispiel 6

Man verwendet Ringtabletten, die gemäß Beispiel 3 hergestellt wurden, als Verdünnungsmaterial bei der Ethylendichlorid-Synthese Dazu mischt man den CuCl₂/KCl/Al₂O₃-Katalysator, der in Ringform mit den Maßen 5x5x2 mm vorliegt mit den Graphitringen 5x5x2 mm gemäß einem anlagenspezifischen Verdünnungsprofil (hohe Verdünnung am Gaseingang, niedrige Verdünnung am Gasausgang).

Durch Einsatz von Graphit-Ringtabletten kann der Druckverlust in der Anlage um bis zu 10% gegenüber dem Druckverlust bei Einsatz von zylindrischen oder gesplitteten Granulaten gesenkt werden.

## Patentansprüche

1. Preßlinge, die zu 30 bis 100 Gew.-% aus Graphit bestehen, hergestellt aus Graphit-Pulvern, die aus 5 bis 100 Gew.-% rhomboedrisch kristallisiertem Graphit bestehen und gegebenenfalls Zuschlagstoffe und/oder Bindemittel enthalten.

2. Verfahren zur Herstellung von Preßlingen, die zu 30 bis 100 Gew.-% aus Graphit bestehen, dadurch gekennzeichnet, daß man Graphit-Pulver einsetzt, das zu 5 bis 100 Gew.-% aus rhomboedrisch kristallisiertem Graphit besteht und gegebenenfalls Zuschlagstoffe und/oder Bindemittel enthält.

3. Verfahren zur Herstellung von Graphit-Preßlingen nach Anspruch 2, dadurch gekennzeichnet, daß man als Bindemittel Mono- oder Oligosaccharide zusetzt.

4. Verfahren zur Herstellung von Graphit-Preßlingen nach Anspruch 2, dadurch gekennzeichnet, daß man die Mischungen von rhomboedrisch kristallisierten Graphit-Pulvern und gegebenenfalls Zuschlagstoffen und/oder Bindemitteln verpreßt und gegebenenfalls einer Wärmebehandlung unterwirft.

5. Verfahren zur Herstellung von Graphit-Preßlingen nach Anspruch 2, dadurch gekennzeichnet, daß man die Mischungen von rhomboedrisch kristallisierten Graphit-Pulvern und gegebenenfalls Zuschlagstoffen und/oder Bindemitteln verpreßt und einer Wärmebehandlung unter Sauerstoffausschluß unterwirft.

6. Preßlinge nach Anspruch 1, dadurch gekennzeichnet, daß es Formkörper sind, die vom Zylinder oder der Kugel abweichende Formen mit ebenen, konvexen oder konkaven Stirnflächen haben.

7. Preßlinge nach Anspruch 1, dadurch gekennzeichnet, daß es Formkörper in Form von Ringen, Sternen, Sätteln und mehrfach gelochten Formen sind.

8. Verwendung der Preßlinge nach Anspruch 1 als Katalysator-Träger, Wärmeübertragungsmaterial, Kolonnenfüllkörper oder Verdünnungsmaterial in Katalysatorbetten.
